# EUROPÄISCHE PATENTSCHRIFT

(11) **EP 0 588 803 B1**
(45) Veröffentlichungstag und Bekanntmachung des Hinweises auf die Patenterteilung: **18.12.1996**
(21) Anmeldenummer: 92908730.2
(22) Anmeldetag: 15.04.1992
(51) Int. Cl.: C04B 35/58, D21F 1/48

(54) **TRAGELEMENT FÜR DAS SIEB BZW. DEN FILZ EINER PAPIER- ODER KARTONMASCHINE, VERFAHREN ZU SEINER HERSTELLUNG UND SEINE VERWENDUNG**
BEARER FOR THE SCREEN OR FELT OF A PAPER OR CARDBOARD MACHINE, PROCESS FOR MAKING IT AND ITS USE
ELEMENT-SUPPORT POUR LE TAMIS ET LE FEUTRE D'UNE MACHINE A PAPIER OU A CARTON, SON PROCEDE DE FABRICATION ET SON UTILISATION

(30) Priorität: 26.04.1991 DE 4113702
(43) Veröffentlichungstag der Anmeldung: 30.03.1994
(73) Patentinhaber: CERASIV GmbH INNOVATIVES KERAMIK-ENGINEERING, D-73207 Plochingen (DE)
(72) Erfinder: NAGEL, Alwin, D-7316 Köngen (DE); SUTTOR, Harald, D-7300 Esslingen (DE)
(74) Vertreter: Uppena, Franz, Dr.
(86) Internationale Anmeldenummer: EP9200847
(87) Internationale Veröffentlichungsnummer: WO9219565

(56) Entgegenhaltungen:
- DE-A- 2 950 024
- GB-A- 2 165 860
- CHEMICAL ABSTRACTS, vol. 93, no. 24, 1980, Columbus, OH (US); TOSHIBA CERAMICS Co. Ltd., no. 224669h

## Beschreibung

Die Erfindung betrifft ein Tragelement für das Sieb bzw. den Filz einer Papier-oder Kartonmaschine, wie Siebtisch, Stütztisch, Foil, Saugkastenbelag, Deflektor und Rohrsauger, welches sowohl der Sieb- oder Filzunterstützung als auch der Entwässerung dient und aus einem oder mehreren zusammengesetzten Sinterformkörpern auf Basis von Siliziumnitrid besteht.

Als Werkstoff wurde für die Tragelemente von Papier-und Kartonmaschinen bisher vorwiegend Oxidkeramik, insbesondere Aluminiumoxid vorgeschlagen, s. DE-A-20 26 457 und DE-C-29 09 291. Als weiterer Werkstoff ist aus der DE-A-38 23 882 und der DE-A-33 06 457 Siliziumkarbid bekannt. Gemäß der DE-A-29 50 024 sind auch bereits Stützeinrichtungen für Papiermaschinensiebe bekannt, deren Zusammensetzung als im wesentlichen aus Siliziumnitrid bestehend angegeben wird. Neben Siliziumnitrid enthält das Material dieser bekannten Tragelemente Eisen, Eisenoxid, Ferrosilizium und Magnesiumoxid. Die Biegebruchfestigkeit des gesinterten Siliziumnitrids ist mit 25 bis 37 kg/mm² entsprechend 245 bis 363 MPa sehr gering, andererseits entspricht die Härte derjenigen einer Tonerdekeramik. Wie sich dazu aus der eingangs genannten DE-C-29 09 291 ergibt, liegt die Vickers-Härte von bekannten Aluminiumoxidkeramiken bei 1.600 bis 1.800.

Aus der JP-A-63307167 ist eine Pulverzusammensetzung aus mind. 50 Gew.% Siliziumnitrid, einer mittleren Korngröße von nicht mehr als 10 µm bekannt, der 0,5 bis 15 Gew.% Aluminiumoxid mit einer mittleren Korngröße von nicht mehr als 10 µm, 5 bis 10 Gew.% Siliziumdioxid mit einer mittleren Korngröße von nicht mehr als 15 µm und 2 bis 8 Gew.% Yttriumoxid mit einer mittleren Korngröße von nicht mehr als 10 µm zugesetzt sind. Aus dieser Pulvermischung wird ein Artikel geformt und unter Stickstoff bei einem Druck von weniger als 2 atm während einer Stunde bei 1.600 bis 1.850 °C gesintert.

Gemäß der US-A-48 92 848 ist ein Verfahren zur Herstellung von Gasturbinenbauteilen bekannt, das eine Zugabe von 2 bis 13 Gew.% Sinterhilfsmittel zu Siliziumnitrid vorsieht. Das Sinterhilfsmittel besteht aus 1 bis 7 Gew.% eines anorganischen und zur Ausbildung einer flüssigen Phase mit niedrigem Schmelzpunkt geeigneten Oxids, wie z. B. Siliziumdioxid, Magnesiumoxid, Kalziumoxid oder Strontiumoxid; der Rest des Sinterhilfsmittels besteht aus einem Oxid oder Nitrid eines Elements der Gruppe IIIa des PSE, z. B. Aluminiumoxid, Yttriumoxid. Zur Ausbildung einer Flüssigphase wird zunächst bei 1.650 bis 1.800 °C unter Stickstoff gesintert. In einem anschließenden Verfahrensschritt wird der gesinterte Körper unter Stickstoffatmosphäre zwischen 1.900 und 2.000 °C zur Verflüchtigung der Flüssigphase behandelt. Dabei entsteht eine Siliziumnitrid-Keramik mit reduziertem Oxidgehalt im inneren und höherem - jedoch unter 3 Gew.% liegendem - Sauerstoffanteil an der Oberfläche.

Die bekannten Tragelemente aus Oxidkeramik weisen trotz ihrer hohen Härte noch verschiedene Nachteile auf, insbesondere wenn Faserstoffmischungen, die abrasive Füllstoffe, wie z.B. Titandioxid und Kalziumkarbonat enthalten, verarbeitet werden. Insbesondere besteht darin ein Nachteil, daß durch das über das Tragelement geführte Papiermaschinensieb im Tragelement Einschnitte entstehen, die einmal entstanden, außerordentlich verschleißfördernd wirken und die rasche Zerstörung des Siebes zur Folge haben.

Das auch bereits zur Herstellung von Tragelementen vorgeschlagene Siliziumnitrid weist den Nachteil einer noch nicht ausreichenden Korrosionsbeständigkeit und geringen mechanischen Festigkeit auf. Die geringe Korrosionsbeständigkeit ist dabei auf die infolge des Vorliegens von Eisen, Eisenoxid und Ferrosilizium überwiegend mit metallischer Natur ausgebildete Korngrenzenphase zurückzuführen. Infolge des auf der Oberfläche des Siliziumnitrids in unvermeidbarer Weise aber nur in geringen Anteilen vorliegenden Siliziumdioxids kann ein geringerer Teil der Korngrenzenphase als Eisensilikat- oder Eisenmagnesiumsilikatmischung ausgebildet sein. Jedoch handelt es sich bei diesem Teil der Korngrenzenphase mehr um eine mit Siliziumdioxid verunreinigte Eisenoxidphase bzw. Eisen-/Magnesiumsilikatphase, die infolge ihres geringen Anteils ohne Einfluß auf die Korrosionsbeständigkeit ist. Die geringe Korrosionsbeständigkeit wirkt sich insbesondere bei der Reinigung der Papiermaschine mit sauren oder alkalischen Hilfsmitteln aus, die auf die metallische Korngrenzenphase korrodierend wirken.

Die geringe Biegefestigkeit und der niedrige Elastizitätsmodul (Young'scher Modul), der beispielhaft mit 2,5 x 10⁶ kg/cm² entsprechend 245 GPA angegeben wird, kennzeichnen ein Material von geringer mechanischer Beständigkeit, die sich insbesondere beim Hantieren mit den Bauteilen während des Einbaus oder während notwendiger Reparaturarbeiten nachteilig in Form einer unzureichenden Schlagfestigkeit und Stoßbeanspruchbarkeit bemerkbar macht.

Ein weiterer Nachteil der bekannten Tragelemente aus Siliziumnitrid liegt in ihrer geringen Thermoschockbeständigkeit. Dieser Eigenschaft kommt eine entscheidende Bedeutung beim Trockenlauf der Papier- oder Kartonmaschine zu, d.h. wenn das Sieb beim Anfahren oder Abstellen der Maschine oder bei Betriebsstörungen ohne Wasser bzw. Faserstoffbrei über das Traglement läuft. Durch die hohen Siebgeschwindigkeiten kann es dabei in Sekundenbruchteilen zu lokalen Überhitzungen der Tragelemente und damit zu Risse verursachenden Spannungsspitzen kommen. Selbst kleinste Risse bewirken anschließend eine dramatisch verringerte Lebensdauer der Tragelemente. Obwohl die inzwischen entwickelten Siliziumnitridkeramiken über verbesserte mechanische Eigenschaften verfügen, konnten Tragelemente aus Silizumnitrid die bekannten Tragelemente aus Oxidkeramik bisher nicht verdrängen.

Die Aufgabe der Erfindung ist es, die noch bestehenden Nachteile zu beseitigen und ein Tragelement mit erhöhter Verschleißfestigkeit, Korrosionsbeständigkeit und verbesserter Thermoschockbeständigkeit zur Verfügung zu stellen. Wie Untersuchungen der Erfinder ergeben haben, lassen sich die anstehenden Probleme durch die Verwendung eines Tragelementes aus einem Siliziumnitrid mit bestimmter Zusammensetzung und Mikrostruktur sowie bestimmtem Eigenschaftsspektrum lösen.

Zur Lösung der anstehenden Aufgabe sieht die Erfindung daher bei einem Traglement nach dem Gattungsbegriff des Patentanspruchs 1 vor, daß:
A:
   - die Hauptgefügephase der Sinterformkörper aus spießförmigen β-Siliziumnitridkörnern besteht,
   - die besagten Körner von einer amorphen oder teilkristallinen Korngrenzenphase umgeben sind, die aus:
      einer Seltenen Erde/Aluminiumsilikatphase und/oder
      einer Yttriumaluminiumsilikatphase und/oder einer Magnesium/Aluminiumsilikatphase besteht,
   - der Gehalt an kationischen Verunreinigungen im Sinterformkörper weniger als 1 Gew.% beträgt,
   - wobei sich alle Gew.-Teile auf 100 Gew.% ergänzen,
   - die besagten Körner einen mittleren Korndurchmesser von nicht mehr als 1,5 µm aufweisen.
B:
   - die Sinterformkörper eine Biegebruchfestigkeit von mind. 500 MPa und eine Vickershärte HV 0,5 von 1.400 bis 1.700 (nach DIN 50 133) besitzen.

Es ist an sich überraschend, daß die erfindungsgemäßen Tragelemente trotz ihrer bis auf einen Wert von 1.400 absenkbaren Vickers-Härte 0,5 eine erheblich verbesserte Verschleißbeständigkeit aufweisen. Wie die Untersuchungen der Erfinder gezeigt haben und wie an sich aufgrund der relativ geringen Härte der erfindungsgemäßen Tragelemente auch zu vermuten war, entstehen durch das über das Tragelement geführte Maschinensieb die bei der Diskussion des Standes der Technik erwähnten Einschnitte bzw. Kanten in den Tragelementen. Die weitere Entwicklung der Einschnitte und Kanten verläuft jedoch insofern gänzlich anders, als mit fortdauernder Versuchszeit eine Abrundung der scharfen Kanten und Einschnitte entsteht, wodurch die Lebenserwartung des Siebes während des weiteren Betriebes in wesentlich geringerem Umfang beeinträchtigt wird. Dieser vorteilhafte Effekt erklärt sich durch die spießförmige Kornform der die Hauptgefügephase der Sinterformkörper bildenden Siliziumnitridkörner mit einem 1,5 µm nicht überschreitenden mittleren Durchmesser.

Die gute Korrosionsbeständigkeit der Traglemente erklärt sich durch die erfindungsgemäße Zusammensetzung der Korngrenzenphase, die im Fall der Zugabe von Yttriumoxid aus Yttriumaluminiumsilikat, im Fall der Zugabe von Magnesiumoxid aus einer dem Forsterit ähnlichen Magnesium/Silikatphase besteht, bzw. im Fall der Zugabe von Seltenen Erdoxiden aus entsprechenden Aluminiumsilikatphasen, vorzugsweise einer Ceraluminiumsilikatphase oder Lanthanaluminiumsilikatphase.

Da erfindungsgemäß nur ein maximaler kationischer Verunreinigungsgehalt von weniger als 1 % zugelassen ist, sind die Korngrenzenphasen der Sinterformkörper bei den Tragelementen der vorliegenden Erfindung nur in untergeordneter Menge durch Bestandteile verunreinigt, die in unvermeidbarer Weise eingeschleppt werden und an sich die Korrosionsbeständigkeit und mechanischen Festigkeitswerte negativ beeinflussen können. Als nachteilig und gemäß der Erfindung in Mengen von mehr als 1 Gew.% unbedingt zu vermeiden, sind insbesondere die Ionen des Chlors, Fluors, Eisens, Bariums, Natriums, Kaliums, Strontiums und Kalziums. Die geringe Menge an zugelassener kationischer Verunreinigung schließt jedoch eine Beeinflussung der Eigenschaften aus.

Ein weiterer wesentlicher Aspekt der Erfindung ist die Biegebruchfestigkeit von mindestens 500 MPa.

Unter der in den Patentansprüchen und der Beschreibung genannten Biegebruchfestigkeit ist dabei die Prüfung nach der sogenannten Vierpunkt-Methode zur verstehen.

Bei einer vorzugsweisen Ausführungsform des Tragelementes liegt der Anteil der aus β-Siliziumnitridkörnern bestehenden Hauptgefügephase im Bereich von 77 bis 86 Gew.%. Es hat sich gezeigt, daß Tragelemente aus Sinterformkörpern mit einer in diesem Bereich liegenden Hauptgefügephase einen besonders ausgeprägten Verschleißwiderstand aufweisen. Gemäß weiteren bevorzugten Ausführungsformen weisen die Sinterformkörper zur Zusammensetzung oder Ausbildung der Tragelemente eine Bruchzähigkeit K_{Ic} > 6,5 MPa √m auf; besitzen eine Oberflächenrauhigkeit Ra < 0,2 µm, einen thermischen Längenausdehnungskoeffizienten α < 3,5 x 10⁻⁶ K⁻¹ im Temperaturbereich von 20 bis 500 °C und haben eine Biegebruchfestigkeit, die bei mehr als 600 MPa liegt.

Ein wesentlicher Faktor zur Erzielung der vorstehend genannten physikalischen Eigenschaften ist der Korngrößenbereich der Sinterformkörper, der vorzugsweise im Bereich von 0,5 bis 1,5 µm, ganz besonders bevorzugt im Bereich von 0,7 bis 1 µm liegt. Der Messung der Korngröße ist dabei die mittlere Sehnenlänge einer durch ein Schliffbild gelegten Geraden zugrundegelegt. Ein anderer Faktor ist der Kornstreckungsgrad, der in den Sinterkörpern vorliegenden Körner, unter dem das Verhältnis von Länge und Durchmesser der Körner zu verstehen ist.

Vorzugsweise weisen die Körner der Hauptgefügephase einen Kornstreckungsgrad von 5 bis 9, ganz besonders bevorzugt sogar von 6 bis 8 auf.

Biegebruchfestigkeit und thermischer Längenausdehnungskoeffizient beeinflussen maßgeblich das Thermoschockverhalten. Ein weiterer für das Thermoschockverhalten wichtiger Wert ist der Elastizitätsmodul, der für die Sinterformkörper nach der Erfindung vorzugsweise im Bereich von 250 bis 310 GPa liegt.

Weisen die Sinterformkörper, aus denen die Tragelemente bestehen oder zusammengesetzt sind, eine Bruchzähigkeit > 6,5 MPa √m auf, wirkt sich dies insbesondere vorteilhaft hinsichtlich der Handhabbarkeit aus und macht die Tragelemente gegenüber mechanischen Einflüssen, wie Durchbiegung und Schlagbeanspruchung, unempfindlicher. Auch diese Eigenschaft wird durch die Mikrostruktur beeinflußt, denn die spießförmig ausgebildeten Körner der Sinterformkörper bewirken einen Rissablenkungsmechanismus, indem ein auftretender Riss das Korn umläuft, wobei seine Energie aufgezehrt wird. Ein weiterer Einflußfaktor für diesen Mechanismus ist neben dem spießförmig ausgebildeten Korn die Ausbildung der Korngrenzphase. Wie vorstehend angegeben, umläuft der Riss das Korn, d.h. er durchläuft die Korngrenzphase, wobei zweckmäßigerweise der interkristalline Bruchanteil > 30 %, vorzugsweise > 50 % ist.

Die Porosität der Sinterformkörper beträgt vorzugsweise maximal 5 %, besonders bevorzugt weniger als 3 % und überschreitet gemäß einer ganz besonders bevorzugten Ausführungsform nicht den Wert von 0,5 %.

Die bei den erfindungsgemäßen Tragelementen einzustellende Porengröße sollte vorzugsweise nicht kleiner als 1 und nicht gröber als 50 µm sein, wobei sich insbesondere ein Mittelwert der Porengröße von 2 bis 8 µm als geeignet erwiesen hat.

Bei der Herstellung der Sinterformkörper, die zur Ausbildung der erfindungsgemäßen Tragelemente dienen, wird von Ausgangszusammensetzungen mit einer mittleren Korngröße von 0,1 bis 1 µm ausgegangen, wobei die Ausgangszusammensetzung wie folgt zusammengesetzt ist:
4 bis 6 Gew.% Siliziumdioxid,
2 bis 5 Gew.% Aluminiumoxid,
mehr als 8 bis 12 Gew.% Seltenes Erdoxid und/oder Yttriumoxid und/oder Magnesiumoxid, einem Anteil sonstiger Substanzen, der zu einem Gehalt von weniger als 1 Gew.% kationischer Verunreinigungen führt,
Rest Siliziumnitrid, wobei sich alle Gewichtsteile auf 100 Gew.% ergänzen.

In an sich bekannter Weise können zur Mahlung einer in dieser Korngröße vorliegenden Ausgangszusammensetzung Wasser oder andere geeignete Medien, wie z.B. Alkohole, Benzin oder Aceton eingesetzt werden. Als temporäre Bindemittel dienen z.B. Polyvinylalkohol oder Polyäthylenglykol. Die fertig gemahlene Mischung kann zur Erzeugung eines rieselfähigen Granulates sprühgetrocknet werden und durch axiales oder isostatisches Pressen, durch Schlickerguß oder durch Extrudieren zu einem grünen Körper geformt werden, der durch Sintern unter Stickstoffatmosphäre von 0,1 - 0,2 MPa während eines Zeitraumes von 2 bis 8 Stunden auf eine Temperatur von 1.700 bis 1.850 °C aufgeheizt und bei dieser Temperatur 1 bis 8 Stunden lang gehalten wird. Nach Abkühlen des gesinterten Körpers erfolgt die Nachbearbeitung zur Einstellung der geforderten Oberflächenqualität, z.B. mit kunststoffgebundenen Diamantschleifscheiben. Eine alternative Sintermethode ist das Gasdrucks intern bei mehr als 0,2 bis 20 MPa Stickstoffdruck und Temperaturen im Bereich von 1.700 bis 1.950 °C bei einer gleichen Aufheizzeit und Haltezeit wie vorstehend zum drucklosen Sintern angegeben.

Als Seltenes Erdoxid werden bevorzugt eingesetzt die Oxide des Cers oder Lanthans oder eine Mischung dieser beiden Oxide. Das vorstehend - auch in seiner Herstellung - beschriebene Tragelement wird erfindungsgemäß in einem Verfahren zum Entwässern eines Faserstoffbreies verwendet, bei dem ein Sieb bzw. der Filz einer Papier- oder Kartonmaschine über das Tragelement geführt wird.

## Patentansprüche

1. Tragelement für das Sieb bzw. den Filz einer Papier- oder Kartonmaschine, wie Siebtisch, Stütztisch, Foil, Saugkastenbelag, Deflektor und Rohrsauger, welches sowohl der Sieb- oder Filzunterstützung als auch der Entwässerung dient und aus einem oder mehreren zusammengesetzten Sinterformkörpern auf Basis von Siliziumnitrid besteht, dadurch gekennzeichnet, daß:
A:
- die Hauptgefügephase der Sinterformkörper aus spießförmigen β-Siliziumnitridkörnern besteht,
- die besagten Körner von einer amorphen oder teilkristallinen Korngrenzenphase umgeben sind, die aus:
einer Seltenen Erde/Aluminiumsilikatphase und/oder
einer Yttriumaluminiumsilikatphase und/oder einer Magnesium/Aluminiumsilikatphase besteht,
- der Gehalt an kationischen Verunreinigungen im Sinterformkörper weniger als 1 Gew.% beträgt,
- wobei sich alle Gew.-Teile auf 100 Gew.% ergänzen,
- die besagten Körner einen mittleren Korndurchmesser von nicht mehr als 1,5 µm aufweisen.
B: die Sinterformkörper eine Biegebruchfestigkeit von mind. 500 MPa und eine Vickershärte HV 0,5 (nach DIN 50 133) von 1.400 bis 1.700 besitzen.

2. Tragelement nach Anspruch 1, dadurch gekennzeichnet, daß die Korngrenzenphase eine Ceraluminiumsilikatphase und/oder eine Lanthanaluminiumsilikatphase ist.

3. Tragelement nach einem der Ansprüche 1 oder 2, dadurch gekennzeichnet, daß der Anteil der aus β-Siliziumnitrid-Körnern bestehenden Hauptgefügephase im Bereich von 77 bis 86 Gew.% liegt.

4. Tragelement nach einem der Ansprüche 1 bis 3, dadurch gekennzeichnet, daß die Sinterformkörper eine Bruchzähigkeit K_{Ic} > 6,5 MPa √m aufweisen.

5. Tragelement nach einem der Ansprüche 1 bis 4, dadurch gekennzeichnet, daß die Sinterformkörper eine Oberflächenrauhigkeit Ra < 0,2 µm aufweisen.

6. Tragelement nach einem der Ansprüche 1 bis 5, dadurch gekennzeichnet, daß die Sinterformkörper einen thermischen Längenausdehnungskoeffizienten α von 20 °C bis 500 °C von < 3,5 x 10⁻⁶ K⁻¹ aufweisen.

7. Tragelement nach einem der Ansprüche 1 bis 6, dadurch gekennzeichnet, daß die Sinterformkörper eine Biegebruchfestigkeit > 600 MPa aufweisen.

8. Tragelement nach einem der Ansprüche 1 bis 7, dadurch gekennzeichnet, daß die im Sinterformkörper vorliegenden Körner der Hauptgefügephase eine Korngröße von 0,5 bis 1,5 µm - gemessen als mittlere Sehnenlänge der Anzahlverteilung - aufweisen.

9. Tragelement nach einem der Ansprüche 1 bis 8, dadurch gekennzeichnet, daß die im Sinterformkörper vorliegenden Körner der Hauptgefügephase eine Korngröße von 0,7 bis 1 µm - gemessen als mittlere Sehnenlänge der Anzahlverteilung - aufweisen.

10. Tragelement nach einem der Ansprüche 1 bis 9, dadurch gekennzeichnet, daß die im Sinterformkörper vorliegenden Körner der Hauptgefügephase einen Kornstreckungsgrad von 5 bis 9 aufweisen.

11. Tragelement nach einem der Ansprüche 1 bis 10, dadurch gekennzeichnet, daß die im Sinterformkörper vorliegenden Körner der Hauptgefügephase einen Kornstreckungsgrad von 6 bis 8 aufweisen.

12. Tragelement nach einem der Ansprüche 1 bis 11, gekennzeichnet durch eine Porosität der Sinterformkörper von maximal 5 %.

13. Tragelement nach einem der Ansprüche 1 bis 12, gekennzeichnet durch einen Porengrößenbereich der Sinterformkörper von 1 bis 50 µm und einen Mittelwert der Porengröße von 2 bis 8 µm.

14. Verfahren zur Herstellung eines Tragelementes nach einem der Ansprüche 1 bis 13, dadurch gekennzeichnet, daß eine Ausgangszusammensetzung mit einer mittleren Korngröße von 0,1 bis 1 µm aus:
4 bis 6 Gew.% Siliziumdioxid,
2 bis 5 Gew.% Aluminiumoxid,
mehr als 8 bis 12 Gew.% Seltenes Erdoxid und/oder Yttriumoxid und/oder Magnesiumoxid, einem Anteil sonstiger Substanzen, der zu einem Gehalt von weniger als 1 Gew.% kationischer Verunreinigungen führt,
Rest Siliziumnitrid, wobei sich alle Gewichtsteile auf 100 Gew.% ergänzen,
hergestellt und aus der Zusammensetzung ein Grünkörper gebildet wird, der gebildete Grünkörper auf eine Temperatur von 1.700 bis 1.850 Grad unter Stickstoffatmosphäre von 0,1 - 0,2 MPa während einer Zeit von 2 bis 8 Stunden aufgeheizt wird, diese Temperatur während einer Zeit von 1 bis 8 Stunden eingehalten und der gebildete Sinterkörper anschließend zur Einstellung der geforderten Oberflächenqualität geschliffen wird.

15. Verfahren zum Herstellen eines Tragelementes nach einem der Ansprüche 1 bis 13, dadurch gekennzeichnet, daß eine Ausgangszusammensetzung mit einer mittleren Korngröße von 0,1 bis 1 µm aus:
4 bis 6 Gew.% Siliziumdioxid,
2 bis 5 Gew.% Aluminiumoxid,
mehr als 8 bis 12 Gew.% Seltenes Erdoxid und/oder Yttriumoxid und/oder Magnesiumoxid, einem Anteil sonstiger Substanzen, der zu einem Gehalt von weniger als 1 Gew.% kationischer Verunreinigungen führt,
Rest Siliziumnitrid, wobei sich alle Gewichtsteile auf 100 Gew.% ergänzen,
hergestellt und aus der Zusammensetzung ein Grünkörper gebildet wird, der gebildete Grünkörper einem Vorsintergang unterworfen wird und anschließend während einer Zeit von 2 bis 8 Stunden auf eine Temperatur im Bereich von 1.700 bis 1.950 Grad aufgeheizt wird, diese Temperatur während einer Zeit von 1 bis 8 Stunden gehalten wird, wobei während der Aufheizzeit und Haltezeit ein Stickstoffdruck von > 0,2 bis 20 MPa eingestellt und
der Körper im Anschluß daran zur Einstellung der geforderten Oberflächenqualität geschliffen wird.

16. Verfahren zur Herstellung eines Tragelementes nach Anspruch 14 oder 15, dadurch gekennzeichnet, daß als Seltenes Erdoxid Ceroxid und/oder Lanthanoxid verwendet wird.

17. Verfahren zum Entwässern eines wäßrigen Faserstoffbreies, bei dem ein Sieb bzw. der Filz einer Papier- oder Kartonmaschine über ein Tragelement nach einem der Ansprüche 1 bis 13 geführt wird.

## Claims

1. Support element for the wire or the felt of a paper or board machine, for example a wire table, support table, foil, suction box cover, deflector or suction pipe, which serves both for support of the wire or felt and for dewatering and comprises one or more assembled sintered shaped bodies based on silicon nitride, characterized in that:
A:
- the main microstructure phase of the sintered shaped bodies comprises acicular β-silicon nitride grains,
- the said grains are surrounded by an amorphous or partially crystalline grain boundary phase which comprises:
a rare earth/aluminium silicate phase and/or
an yttrium aluminium silicate phase and/or
a magnesium/aluminium silicate phase,
- the content of cationic impurities in the sintered shaped body is less than 1% by weight,
- where all parts by weight add up to 100% by weight,
- the said grains have a mean grain diameter of not more than 1.5 µm.
B: the sintered shaped bodies have a flexural strength of at least 500 MPa and a Vickers hardness HV 0.5 (in accordance with DIN 50 133) of 1400 to 1700.

2. Support element according to Claim 1, characterized in that the grain boundary phase is a cerium aluminium silicate phase and/or a lanthanum aluminium silicate phase.

3. Support element according to Claim 1 or 2, characterized in that the proportion of the main microstructure phase comprising β-silicon nitride grains is in the range from 77 to 86% by weight.

4. Support element according to any of Claims 1 to 3, characterized in that the sintered shaped bodies have a fracture toughness K_{Ic} > 6.5 MPa √m.

5. Support element according to any of Claims 1 to 4, characterized in that the sintered shaped bodies have a surface roughness Ra < 0.2 µm.

6. Support element according to any of Claims 1 to 5, characterized in that the sintered shaped bodies have a linear coefficient of thermal expansion α of < 3.5 x 10⁻⁶ K⁻¹ at 20°C to 500°C.

7. Support element according to any of Claims 1 to 6, characterized in that the sintered shaped bodies have a flexural strength > 600 MPa.

8. Support element according to any of Claims 1 to 7, characterized in that the grains of the main microstructure phase in the sintered shaped body have a grain size of from 0.5 to 1.5 µm, measured as mean chord length of the number distribution.

9. Support element according to any of Claims 1 to 8, characterized in that the grains of the main microstructure phase in the sintered shaped body have a grain size of from 0.7 to 1 µm, measured as mean chord length of the number distribution.

10. Support element according to any of Claims 1 to 9, characterized in that the grains of the main microstructure phase in the sintered shaped body have an aspect ratio of from 5 to 9.

11. Support element according to any of Claims 1 to 10, characterized in that the grains of the main microstructure phase in the sintered shaped body have an aspect ratio of from 6 to 8.

12. Support element according to any of Claims 1 to 11, characterized by a porosity of the sintered shaped bodies of at most 5%.

13. Support element according to any of Claims 1 to 12, characterized by a pore size range in the sintered shaped bodies of from 1 to 50 µm and a mean of the pore size of from 2 to 8 µm.

14. Process for producing a support element according to any of Claims 1 to 13, characterized in that a starting composition having a mean particle size of from 0.1 to 1 µm is prepared from:
from 4 to 6% by weight of silicon dioxide,
from 2 to 5% by weight of aluminium oxide,
from more than 8 to 12% by weight of rare earth oxide and/or yttrium oxide and/or magnesium oxide,
a proportion of other substances which leads to a content of less than 1% by weight of cationic impurities,
remainder silicon nitride, where all parts by weight add up to 100% by weight,
and a green body is formed from the composition, the green body formed is heated to a temperature of from 1700 to 1850 degrees under a nitrogen atmosphere of 0.1-0.2 MPa over a period of from 2 to 8 hours, this temperature is held for a period of from 1 to 8 hours and the sintered body formed is subsequently ground to set the required surface quality.

15. Process for producing a support element according to any of Claims 1 to 13, characterized in that a starting composition having a mean particle size of from 0.1 to 1 µm is prepared from:
from 4 to 6% by weight of silicon dioxide,
from 2 to 5% by weight of aluminium oxide,
from more than 8 to 12% by weight of rare earth oxide and/or yttrium oxide and/or magnesium oxide,
a proportion of other substances which leads to a content of less than 1% by weight of cationic impurities,
remainder silicon nitride, where all parts by weight add up to 100% by weight,
and a green body is formed from the composition, the green body formed is subjected to a presintering step and is subsequently heated to a temperature in the range from 1700 to 1950 degrees over a period of from 2 to 8 hours, this temperature is held for a period of from 1 to 8 hours, with a nitrogen pressure of from > 0.2 to 20 MPa being set during the heating time and hold time and the body subsequently being ground to set the required surface quality.

16. Process for producing a support element according to Claim 14 or 15, characterized in that the rare earth oxide used is cerium oxide and/or lanthanum oxide.

17. Process for dewatering an aqueous fibre pulp, in which a wire or the felt of a paper or board machine is conducted over a support element according to any of Claims 1 to 13.

## Revendications

1. Elément support pour le tamis ou le feutre d'une machine à papier ou à carton, comme une table de tamisage, une table d'appui, une feuille, un revêtement de caisse aspirante, un déflecteur et un aspirateur tubulaire, qui sert non seulement au soutien du tamis ou du feutre mais aussi à l'élimination de l'eau et qui est constitué d'une pièce façonnée frittée ou de plusieurs pièces façonnées frittées assemblées, à base de nitrure de silicium, caractérisé en ce que :
A)
- la phase principale de la structure des pièces façonnées frittées est constituée de grains de nitrure de silicium-β en aiguilles,
- lesdits grains sont entourés d'une phase de séparation granulaire, amorphe ou partiellement cristalline, qui est constituée d'une phase silicate d'aluminium et d'élément des terres rares et/ou d'une phase silicate d'aluminium et d'yttrium et/ou d'une phase silicate d'aluminium et de magnésium,
- la teneur en impuretés cationiques de la pièce façonnée frittée est inférieure à 1 % en poids, toutes les parties en poids représentant au total 100 % en poids,
- lesdits grains présentent un diamètre moyen de grain ne dépassant pas 1,5 µm,
B)
- les pièces façonnées frittées présentent une résistance à la rupture par flexion d'au moins 500 MPa et une dureté Vickers HV 0,5 (selon DIN 50 133) de 1400 à 1700.

2. Elément support selon la revendication 1, caractérisé en ce que la phase de séparation granulaire est une phase silicate d'aluminium et de cérium et/ou une phase silicate d'aluminium et de lanthane.

3. Elément support selon la revendication 1 ou 2, caractérisé en ce que la proportion de la phase principale de la structure, constituée de grains de nitrure de silicium-β, est située dans le domaine allant de 77 à 86 % en poids.

4. Elément support selon l'une quelconque des revendications 1 à 3, caractérisé en ce que les pièces façonnées frittées présentent une ténacité à la rupture K_{Ic} > 6,5 MPa √m.

5. Elément support selon l'une quelconque des revendications 1 à 4, caractérisé en ce que les pièces façonnées frittées présentent une rugosité de surface Ra < 0,2 µm.

6. Elément support selon l'une quelconque des revendications 1 à 5, caractérisé en ce que les pièces façonnées frittées présentent un coefficient de dilatation thermique linéaire α < 3,5 x 10⁻⁶ K⁻¹ pour l'intervalle de températures allant de 20°C à 500°C.

7. Elément support selon l'une quelconque des revendications 1 à 6, caractérisé en ce que les pièces façonnées frittées présentent une résistance à la rupture par flexion supérieure à 600 MPa.

8. Elément support selon l'une quelconque des revendications 1 à 7, caractérisé en ce que les grains de la phase principale de la structure, présents dans la pièce façonnée frittée, possèdent une taille de grain de 0,5 à 1,5 µm, la mesure étant basée sur la longueur moyenne de corde de la répartition en nombre.

9. Elément support selon l'une quelconque des revendications 1 à 8, caractérisé en ce que les grains de la phase principale de la structure, présents dans la pièce façonnée frittée, possèdent une taille de grain de 0,7 à 1 µm, la mesure étant basée sur la longueur moyenne de corde de la répartition en nombre.

10. Elément support selon l'une quelconque des revendications 1 à 9, caractérisé en ce que les grains de la phase principale de la structure, présents dans la pièce façonnée frittée, possèdent un degré d'allongement de grain de 5 à 9.

11. Elément support selon l'une quelconque des revendications 1 à 10, caractérisé en ce que les grains de la phase principale de la structure, présents dans la pièce façonnée frittée, possèdent un degré d'allongement de grain de 6 à 8.

12. Elément support selon l'une quelconque des revendications 1 à 11, caractérisé par une porosité de la pièce façonnée frittée atteignant 5 % au maximum.

13. Elément support selon l'une quelconque des revendications 1 à 12, caractérisé par un domaine de tailles de pore de la pièce façonnée frittée allant de 1 à 50 µm et une valeur moyenne de la taille de pore de 2 à 8 µm.

14. Procédé de préparation d'un élément support selon l'une quelconque des revendications 1 à 13, caractérisé en ce que l'on prépare une composition de départ ayant une taille moyenne de grain de 0,1 à 1 µm, en partant de 4 à 6 % en poids de dioxyde de silicium, 2 à 5 % en poids d'oxyde d'aluminium, plus de 8 jusqu'à 12 % en poids d'oxyde de terres rares et/ou d'oxyde d'yttrium et/ou d'oxyde de magnésium, une certaine proportion d'autres substances qui conduit à une teneur en impuretés cationiques inférieure à 1 % en poids, le reste étant du nitrure de silicium et toutes les parties en poids représentant au total 100 % en poids, et l'on forme un corps vert à partir de la composition, on chauffe le corps vert formé jusqu'à une température de 1700 à 1850 degrés, dans une atmosphère d'azote, sous une pression de 0,1 à 0,2 MPa, en l'espace de 2 à 8 heures, on maintient cette température pendant une durée de 1 à 8 heures et on polit ensuite la pièce frittée formée pour obtenir la qualité de surface exigée.

15. Procédé de préparation d'un élément support selon l'une quelconque des revendications 1 à 13, caractérisé en ce que l'on prépare une composition de départ ayant une taille moyenne de grain de 0,1 à 1 µm, en partant de 4 à 6 % en poids de dioxyde de silicium, 2 à 5 % en poids d'oxyde d'aluminium, plus de 8 jusqu'à 12 % en poids d'oxyde de terres rares et/ou d'oxyde d'yttrium et/ou d'oxyde de magnésium, une certaine proportion d'autres substances qui conduit à une teneur en impuretés cationiques inférieure à 1 % en poids, le reste étant du nitrure de silicium et toutes les parties en poids représentant au total 100 % en poids, et l'on forme un corps vert à partir de la composition, on fait subir au corps vert formé un processus de préfrittage et on le chauffe ensuite jusqu'à une température située dans le domaine allant de 1700 à 1950 degrés, en l'espace de 2 à 8 heures, puis on maintient cette température pendant une durée de 1 à 8 heures, le chauffage et le maintien de la température étant réalisés sous une pression d'azote supérieure à 0,2 MPa et pouvant aller jusqu'à 20 MPa, et on polit ensuite la pièce pour obtenir la qualité de surface exigée.

16. Procédé de préparation d'un élément support selon la revendication 14 ou 15, caractérisé en ce que l'on utilise comme oxyde de terres rares, de l'oxyde de cérium et/ou de l'oxyde de lanthane.

17. Procédé pour éliminer de l'eau d'une bouillie aqueuse d'un produit fibreux, dans lequel un tamis ou le feutre d'une machine à papier ou à carton passe sur un élément support selon l'une quelconque des revendications 1 à 13.
